# EUROPEAN PATENT APPLICATION

(11) **EP 1 491 095 A1**
(43) Date of publication of application: **29.12.2004**
(21) Application number: 03014041.2
(22) Date of filing: 23.06.2003
(51) Int. Cl.: A21B 3/13, A47J 36/02, B65D 65/10, B65D 85/36

(54) **Cup-like cake container**

(71) Applicant: Mars Incorporated, McLean, Virginia 22101-3883 (US)
(72) Inventor: Toledo, Heleen, 5464 PG Veghel (NL)
(74) Representative: Tönhardt, Marion, Dr.

(57) **Abstract**

A cup-like cake container (10) formed by a sheet material, including a bottom portion (12) associated with the bottom surface of the cake and a side wall (14) continuous to the bottom portion (12) and associated with the side surface of the cake, said side wall (14) having a plurality of folds (20,22,24,26,28) at least some of them extending from said bottom portion (12) so as to form a cup-like container body (10), is characterized in that said folds (20,22,24,26,28) are irregularly distributed in said side wall (14) and that said sheet material is dimensioned to form at least one flap (30,32,34) continuous with said side wall (14) and extending at an acute angle to a plane parallel to said bottom portion (12).

## Description

The invention relates to a cup-like cake container formed by a sheet material, including a bottom portion associated with the bottom surface of a cake and a side wall continuous to the bottom portion and associated with the side surface of the cake, said side wall having a plurality of folds at least some of them extending from said bottom portion so as to form a cup-like container body.

Such cake container is intended for forming and maintaining cake batter that is heated to expand in a predetermined configuration. The main problem associated with those cake containers is to stabilize the side wall against restoring forces of the material , usually paper, coated paper or the like. In order to overcome this problem, EP 0 800 997 B 1 proposes to form a step portion intersecting the folds, so that they are prevented from unfolding by the step portion as a stiffening means. Here, however, a complex shaping process is required which increases manufacturing costs.

It is in object of the invention to provide a cake container which is easy to manufacture and convenient to use and which gives the impression of a home-made article.

This object is solved by a cup-like container as defmed in claim 1. Preferred embodiments are subject matter of the subclaims.

According to the invention, the folds in the side wall are irregularly distributed, and the sheet material is dimensioned to form at least one flap continuous with said side wall and extending at an angle to a plane parallel to said bottom portion. The irregularly distributed folds can be generated by pressing a die onto the sheet material into a mold defining the outer dimensions of the cup-like container where the sheet will automatically form folds when entering into the small gap between die and mold. After having reached a certain depth, the still exposed parts of the sheet material can be folded outwardly to form at least one flap. To finish the baked article, cake batter is then introduced into the cup portion of the deformed sheet material while it is resting in a cup holder. During the baking process, the expanding cake batter will flow behind the folds which due to their irregularity form cavities and pouches, so that even the baked product itself will contribute to fix the whole structure. On the other hand, the consumer can easily open the cake container by pulling the flap, and it is preferred to diametrically opposing flaps are provided in order to facilitate handling of the cake container.

It is an advantage of the invention, that due to the self stabilizing function of the irregular folds crumbs remain inside the container, and after the consumer has finished the product, the flaps can be folded upwardly and inwardly to close the container completely.

It is preferred that at least some of said folds are intersecting each other which can be achieved by selecting the gap between die and mold appropriately. This promotes creation of undercuts into which the cake batter flows during heating, and by the adhesion forces, contributes to the stability of the container.

The shape of the bottom of the die determines the shape of the bottom portion which may not only be flat, but also be spheroidally shaped, for example. Further, the container body may be shaped like a circular cup, a triangular cup, a square cup, an elliptical cup or the like. Also the shape of the sheet material may be arbitrarily changed provided that at least one flap can be formed.

A preferred sheet material is paper, because then the cup-like cake container according to the invention can be discarded together with the crumbs or any remainders of cake.

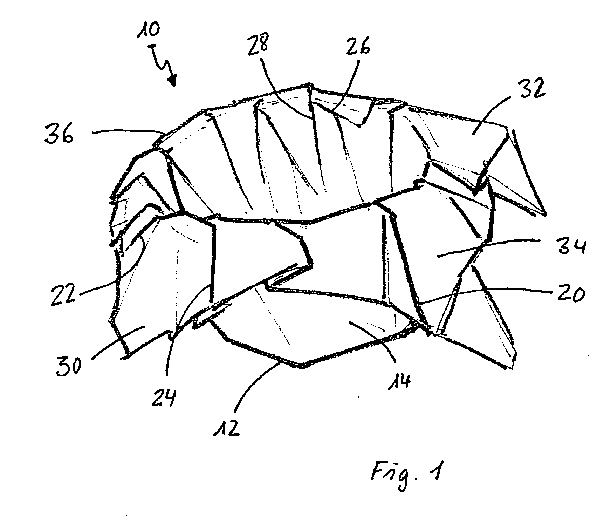

These and other objects, features, aspects and advantages of the present invention will become more apparent from the following detailed description of a preferred embodiment when taking in conjunction with the accompanying drawings, wherein
- Figure 1: is a perspective view of cake container according to the invention.

Sheet-like material in originally rectangular shape has been deformed to a circular container body 10 comprising a bottom portion 12 and a side wall 14 continuous therewith and being provided with a plurality of irregularly distributed folds 20, 22, 24, 26, 28. Some of these irregular folds 20, 22, 24 extend upwardly from the bottom portion along the side wall 14 and into flaps 30, 32. Other folds, for example fold 26, intersect with a fold 28 to promote large roughly in a plane which is parallel to the bottom portion 12 of the container. In order to impart a home-made look to the article, the flaps 30, 32, 34 form an angle to this plane which can vary along the border line 36 of the flaps to the side wall. The flaps, e.g. 30, 34, are diametrally opposing each other, so that a consumer can tear them away from the baked article to release it for consumption.

The features disclosed in the foregoing description, in the claims and/or in the accompanying drawings may, both separately and in any combination thereof, be material for realising the invention in diverse forms thereof.

## Claims

1. A cup-like cake container formed by a sheet material, including a bottom portion (12) associated with the bottom surface of the cake and a side wall (14) continuous to the bottom portion and associated with the side surface of the cake, said side wall (14) having a plurality of folds (20, 22, 24, 26, 28) at least some of them extending from said bottom portion so as to form a cup-like container body, **characterized in that** said folds (20, 22, 24, 26, 28) are irregularly distributed in said side wall (14) and that said sheet material is dimensioned to form at least one flap (30, 32, 34) continuous with said side wall and extending at an angle to a plane parallel to said bottom portion (12).

2. A cup-like container **characterized in that** two diametrally opposing flaps (30, 34) are provided.

3. A cup-like container **characterized in that** at least some of said folds (26, 28) are intersecting each other.
